# EUROPEAN PATENT APPLICATION

(11) **EP 1 432 060 A1**
(43) Date of publication of application: **23.06.2004**
(21) Application number: 03027728.9
(22) Date of filing: 02.12.2003
(51) Int. Cl.: H01M 8/02

(54) **Integrated bipolar plate module for fuel cell stack**

(30) Priority: 10.12.2002 CN 21505246
(71) Applicant: Asia Pacific Fuel Cell Technologies, Ltd., Chunan, Miaoli 350 (TW)
(72) Inventor: Yang, Te-Chou, 4F, No. 22, Ke-Dung 3 Road Miaoli 350 (TW)
(74) Representative: Goddar, Heinz J., Dr.

(57) **Abstract**

An integrated bipolar plate module for a fuel cell stack includes a cathode fluid flow plate, an anode fluid flow plate and a coolant fluid flow plate which is mounted and sandwiched between the cathode fluid flow plate and the anode fluid flow plate. The cathode fluid flow plate is formed with a plurality of channels for conveying a cathode gas, the anode fluid flow plate is formed with a plurality of channels for conveying an anode gas, and the coolant fluid flow plate is formed with a plurality of channels for conveying a coolant between the cathode fluid flow plate and the anode fluid flow plate. In assembly, every two adjacent cell units of the fuel cell stack are separated by a bipolar plate module, so that the cathode gas is conveyed to an adjacent cathode gas diffusion layer through the channels of the cathode fluid flow plate and the anode gas is conveyed to an adjacent anode gas diffusion layer through the channels of the anode fluid flow plate respectively.

## Description

### BACKGROUND OF THE INVENTION

### 1. Field of the Invention

The present invention relates generally to a bipolar plate, and in particular to an integrated module of bipolar plate for fuel cell stack. The integrated bipolar module comprises an anode fluid flow plate, a cathode fluid flow plate and a coolant fluid flow plate.

### 2. Description of the Prior Art

A fuel cell is a power-generating unit that generates electrical energy through electrochemical reaction of hydrogen and oxygen. The fuel cell has the advantages of high energy conversion efficiency, clean exhaust gas, low noise, and non-use of conventional fuels, as compared with a conventional internal combustion engine. In the past few years, it has been highly promoted and developed worldwide.

Fuel cell is classified based on the electrolyte thereof. Among these known fuel cells, the proton exchange membrane fuel cell (PEMFC) is the best-developed technique, having the advantages of low operation temperature, fast start-up and high power density. As a whole, PEMFC has high value for industry.

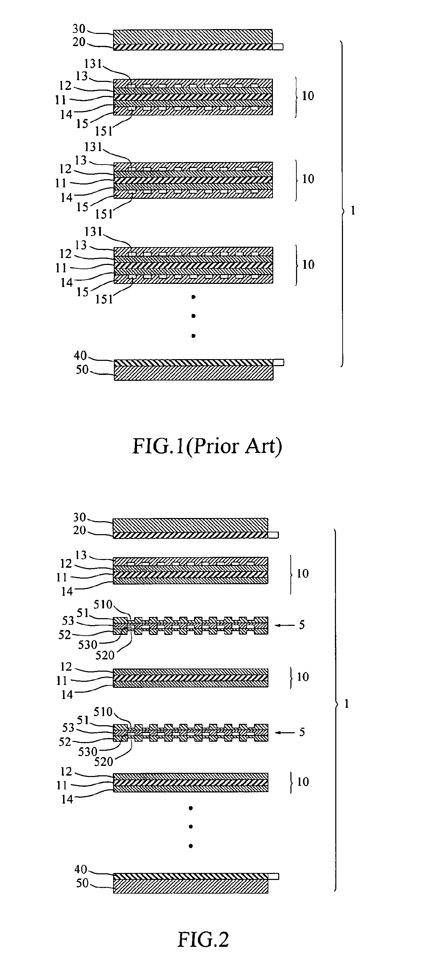

**Fig. 1** is a schematic sectional view showing a structure of the conventional PEM fuel cell stack. As shown, the fuel cell stack **1** comprises a plurality of cell units **10**. Each of the cell units **10** includes a membrane electrode assembly (MEA) **11** which comprises a proton exchange membrane, an anode catalyst layer coated on an anode side of the proton exchange membrane, and a cathode catalyst layer coated on a cathode side of the proton exchange membrane. The cell unit **10** also comprises an anode gas diffusion layer **12** and an anode fluid flow plate **13** at the anode side of the MEA **11**, and a cathode gas diffusion layer **14** and a cathode fluid flow plate **15** at the cathode side of the MEA 11.

In practical application, a plurality of the cell units are stacked to form a cell stack and electrically connected to provide electrical power. A fuel cell stack generally comprises a plurality of cell units **10**, an anode collector **20**, an anode endplate **30**, a cathode collector **40**, a cathode endplate **50**, and a plurality of sealing members and fastening members.

A surface of each of the anode fluid flow plates **13** that faces the anode diffusion layer **12** is formed with a plurality of channels **131** for conveying anode gas (hydrogen) for performing electrochemical reaction in the cell unit **10**. Similarly, a surface of each of the cathode fluid flow plates **15** that faces the cathode diffusion layer **14** is formed with a plurality of channels **151** for conveying cathode gas (air) for performing electrochemical reaction in the cell unit **10**.

Conventionally, each single cell unit is incorporated with an anode fluid flow plate and a cathode fluid flow plate. In the production of a fuel cell stack, all the plates and components have to be stacked one by one precisely and in good order, so that they can be assembled properly. It is a time-consuming process in the manufacture of fuel cell stack. Moreover, since all the plates are manufactured separately, the management of the plates is a heavy work to the producer.

Furthermore, each the cell unit also comprises a plurality of channels (not shown) for conduction of coolant to remove heat and cool down the temperature of the cell unit. Inevitably, the structure of the fuel cell stack is very complicated, and assembly work of the fuel cell stack is heavy. Therefore, the production processes are complicated and production time is prolonged.

### SUMMARY OF THE INVENTION

Thus, an object of the present invention is to provide an integrated bipolar module for a fuel cell stack, which greatly simplifies the assembly process and enhances the quality of fuel cell stack.

Another object of the present invention is to provide an integrated bipolar module for a fuel cell stack, which is simple in structure. The bipolar module comprises a cathode fluid flow plate, an anode fluid flow plate and a coolant fluid flow plate in an integrated structure. Therefore, the assembly work of fuel cell stack can be greatly simplified.

To achieve the above objects, in accordance with the present invention, there is provided an integrated module of bipolar plate, which comprises an anode fluid flow plate, a cathode fluid flow plate and a coolant fluid flow plate which is sandwiched between the cathode fluid flow plate and the anode fluid flow plate. In the production, two sides of a membrane electrode assembly (MEA) are separately incorporated with an anode gas diffusion layer and a cathode gas diffusion layer, forming a single cell unit. Then, a plurality of cell units and integrated bipolar modules are assembled together, in which each of the integrated bipolar modules is interposed in a space between two adjacent cell units, forming a plurality of modulated cell units. Finally, the modulated cell units are combined with an anode collector, an anode endplate, a cathode collector, a cathode endplate and a plurality of fastening members, forming a fuel cell stack.

By replacing the conventional separate plates with the integrated bipolar module of the present invention, the structure of the cell unit is greatly simplified. By using the integrated bipolar module, the assembly of the fuel cell stack would be faster and more efficient. Moreover, quality of the fuel cell stack would be enhanced. Compared with the minute and complicated assembly process of the conventional fuel cell stack, the present invention is significantly more efficient and improved.

### BRIEF DESCRIPTION OF THE DRAWINGS

The present invention will be apparent to those skilled in the art by reading the following description of preferred embodiments thereof, with reference to the attached drawings, in which:

**Figure 1** is a schematic sectional view of a conventional proton exchange membrane fuel cell stack;

**Figure 2** is a schematic sectional view of a fuel cell stack with integrated bipolar module constructed in accordance with the present invention;

**Figure 3** is a perspective view of the fuel cell stack of the present invention;

**Figure 4** is a perspective view of an integrated bipolar module of the bipolar plate of the fuel cell stack of the present invention;

**Figure 5** is a front plan view of the integrated bipolar module, showing a structure of a cathode fluid flow plate;

**Figure 6** is a rear plan view of the integrated bipolar module, showing a structure of an anode fluid flow plate; and

**Figure 7** is a rear plan view of a coolant fluid flow plate of the integrated bipolar module.

### DETAILED DESCRIPTION OF THE PREFERRED EMBODIMENTS

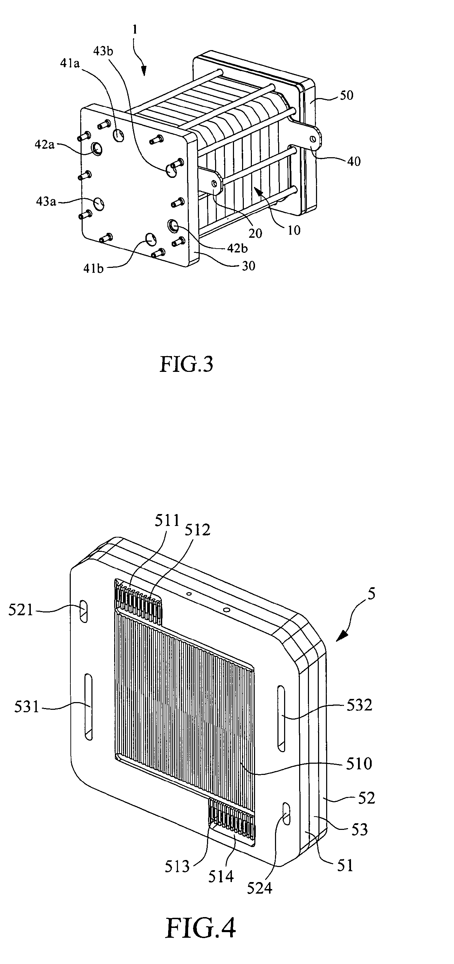

With reference to the drawings and in particular to **Figs. 2** and **3**, in which a fuel cell stack with integrated bipolar plate constructed in accordance with the present invention is shown. For explanation, the same reference numbers used in the previous drawing will be used to refer to the same or like parts.

The fuel cell stack 1 comprises a plurality of cell units **10**. Each of the cell units **10** comprises a membrane electrode assembly (MEA) **11**. On an anode side of the MEA **11,** there is arranged an anode gas diffusion layer **12,** while on a cathode side of the MEA **11**, there is arranged a cathode gas diffusion layer **14**.

The fuel cell stack **1** is formed with passages for transportation of hydrogen gas and air for performing electrochemical reaction. An air inlet **41a** and an air outlet **41b** are formed at an external side of an anode endplate **30**, as shown in **Fig. 3**. Air is drawn in by a blowing device e.g. a blower and conveyed to an air passage of the fuel cell stack **1** via the air inlet **41a**, and unreacted air is conveyed out of the fuel cell stack **1** via the air outlet **41b**.

Also, a hydrogen gas inlet **42a** and a hydrogen gas outlet **42b** are formed at the external side of the anode endplate **30**. Hydrogen gas is supplied by a hydrogen gas source which may comprise a hydrogen canister, and is conveyed to a hydrogen gas passage of the fuel cell stack **1** via the hydrogen gas inlet **42a**, and unreacted hydrogen gas is conveyed out the fuel cell stack **1** via the hydrogen gas outlet **42b**.

Moreover, a coolant inlet **43a** and a coolant outlet **43b** are formed at the external side of the anode endplate **30**. A coolant, which may be air, water, or any appropriate cooling agent, is conveyed to a coolant passage formed in the fuel cell stack **1** via the coolant inlet **43a**. The coolant removes heat from the fuel cell stack **1** and is conveyed out of the fuel cell stack **1** via the coolant outlet **43b**.

In a preferred embodiment of the present invention, the fuel cell stack **1** comprises a plurality of cell units **10** and a plurality of integrated bipolar modules **5**. Each of the integrated bipolar modules **5** is mounted between two adjacent cell units **10**. **Fig. 4** shows an integrated bipolar module of the fuel cell stack in accordance with the present invention. The bipolar module **5** has an integrated structure and may be used to replace the conventional separate plates. The bipolar module **5** of the present invention comprises a cathode fluid flow plate **51** at the top, which faces the cathode gas diffusion layer **14** of the adjacent cell unit **10**. The bipolar module **5** also comprises an anode fluid flow plate **52** at the bottom, which faces the anode gas diffusion layer **12** of the adjacent cell unit **10**. A coolant fluid flow plate **52** is sandwiched between the cathode fluid flow plate **51** and the anode fluid flow plate **52**. The cathode fluid flow plate **51**, the coolant fluid flow plate **53** and the anode fluid flow plate **52** are stacked and combined together to form an integrated structure by coating a layer of an adhesive material between two adjacent plates and thermo-compressing the whole structure. Thereby, the cathode fluid flow plate **51**, the coolant fluid flow plate **53** and the anode fluid flow plate **52** are sealed and fastened tightly.

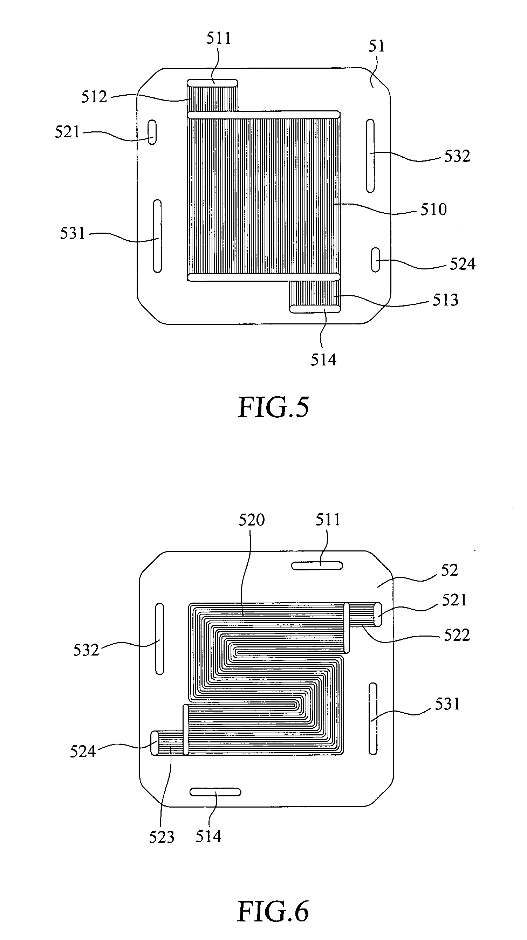

Please refer to **Figs. 4** and **5**. In the present invention, a central portion of the cathode fluid flow plate **51** is formed with a plurality of parallel channels **510**. The channels **510** may be in the form of wave-like corrugation or grooves, which deliver air from an air inlet port **511** via a plurality of connecting channels **512**. Unreacted air is conveyed out through a plurality of connecting channels **513** to an air outlet port **514**. In passing the channels **510** of the cathode fluid flow plate **51**, air flows through the cathode gas diffusion layer **14** adjacent to the cathode fluid flow plate **51** and reaches the cathode catalyst layer of the membrane electrode assembly **11**. Thereby, air is supplied to the cathode catalyst layer to proceed electrochemical reaction thereon.

**Fig. 6** is a rear view of the integrated bipolar module, and an anode fluid flow plate is shown. As shown, a central portion of the anode fluid flow plate **52** is formed with a plurality of parallel and serpentine channels **520**. The channels **520** may be in the form of wave-like corrugation or grooves, which delivers hydrogen gas from a hydrogen gas inlet port **521** via a plurality of connecting channels **522**. Unreacted hydrogen gas is conveyed out through a plurality of connecting channels **523** to a hydrogen gas outlet port **524**. In passing the channels **520** of the anode fluid flow plate **52**, hydrogen gas flows through the anode gas diffusion layer **14** adjacent to the anode fluid flow plate **52** and reaches the anode catalyst layer of the membrane electrode assembly **11**. Thereby, hydrogen gas is supplied to the anode catalyst layer to undergo electrochemical reaction thereon.

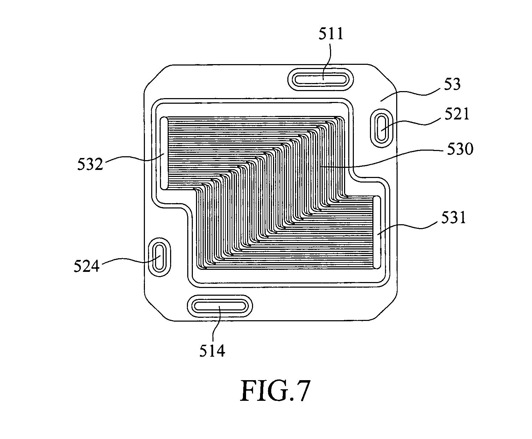

**Figure 7** shows a rear plan view of a coolant fluid flow plate of the integrated bipolar module. As shown, the central portion of the coolant fluid flow plate **53** of the integrated bipolar module **5** is formed with a plurality of parallel and serpentine channels **530** for conduction of a coolant, which may comprise water or air, from a coolant inlet port **531**. Coolant is conveyed out of the coolant fluid flow plate **53** via a coolant outlet port **532**. The coolant removes heat from the cell units **10** when it flows through the channels **530** of the coolant fluid flow plate **53**. Thereby, the fuel cell stack **1** is kept within an appropriate operation temperature.

In the production of the fuel cell stack, two sides of each of the membrane electrode assemblies **11** are separately incorporated with an anode gas diffusion layer **12** and a cathode gas diffusion layer **14**, forming a single cell unit. Subsequently, a plurality of cell units **11** are assembled with a plurality of integrated bipolar module **5**, in which each of the integrated bipolar modules is interposed in a space between two adjacent cell units **11**, forming a plurality of modulated cell units.

Finally, the modulated cell units are stacked and mounted with an anode collector **20**, an anode endplate **30**, a cathode collector **40**, a cathode endplate **30**, and a plurality of sealing members and fastening members to form a fuel cell stack **1**.

In the preferred embodiment described above, the integrated bipolar module is formed of a cathode fluid flow plate **51**, an anode fluid flow plate **52** and a coolant fluid flow plate **53**. The integrated bipolar module **5** may be formed in a different manner in which two of the plates are integrally formed and then combined with the third plate. For example, the cathode fluid flow plate **51** may be integrally formed with the coolant fluid flow plate **53** to constitute a preliminary structure. The outer side of the coolant fluid flow plate **53** of the structure is then combined with the anode fluid flow plate **52** to form a whole integrated module. Alternatively, the anode fluid flow plate **52** is integrally formed with the coolant fluid flow plate **53** to constitute a preliminary structure. The outer side of the coolant fluid flow plate **53** is then combined with the cathode fluid flow plate **51** to form an integrated module. Of course, the three plates may be formed integrally to generate an integrated module of bipolar plate.

From the above-described preferred embodiment, it is apparent that by applying an integrated bipolar module which comprises a cathode fluid flow plate, an anode fluid flow plate and a coolant fluid flow plate, the assembly work of a fuel cell stack can be largely saved and the quality is highly enhanced. Moreover, the structure of fuel cell stack is greatly simplified. The present invention is novel and practical in use.

Although the present invention has been described with reference to the preferred embodiments thereof, it is apparent to those skilled in the art that a variety of modifications and changes may be made without departing from the scope of the present invention which is intended to be defined by the appended claims.

The features disclosed in the foregoing description, in the claims and/or in the accompanying drawings may, both separately and in any combination thereof, be material for realising the invention in diverse forms thereof.

## Claims

1. An integrated bipolar plate module for a fuel cell stack comprising a plurality of cell units, each of which includes a membrane electrode assembly including an anode catalyst layer, a cathode catalyst layer, and a proton exchange membrane between the anode and cathode catalyst layers, the membrane electrode assembly further including an anode gas diffusion layer and a cathode gas diffusion layer adjacent to the anode catalyst layer and the cathode catalyst layer respectively, the integrated bipolar plate module comprising:
a cathode fluid flow plate, formed with a plurality of channels for conveying a cathode gas;
an anode fluid flow plate, formed with a plurality of channels for conveying an anode gas; and
a coolant fluid flow plate, which is mounted and sandwiched between the cathode fluid flow plate and the anode fluid flow plate, formed with a plurality of channels for conveying a coolant between the cathode fluid flow plate and the anode fluid flow plate;
whereby every two adjacent cell units of the fuel cell stack are separated by a bipolar plate module so that the cathode gas is conveyed to an adjacent cathode gas diffusion layer through the channels of the cathode fluid flow plate and the anode gas is conveyed to an adjacent anode gas diffusion layer through the channels of the anode fluid flow plate respectively.

2. The integrated bipolar plate module as claimed in Claim 1, wherein the fuel cell stack further comprises a cathode collector and an anode collector forming on opposite sides of the fuel cell stack, and a cathode endplate and an anode endplate forming on opposite sides of the fuel cell stack.

3. The integrated bipolar plate module as claimed in Claim 1, wherein the cathode fluid flow plate is formed with a plurality of parallel channels in a central portion thereof for conveying the cathode gas from an air inlet to an air outlet through the channels.

4. The integrated bipolar plate module as claimed in Claim 1, wherein the anode fluid flow plate is formed with a plurality of parallel channels in a central portion thereof for conveying the anode gas from a hydrogen gas inlet to a hydrogen gas outlet through the channels.

5. The integrated bipolar plate module as claimed in Claim 1, wherein the coolant fluid flow plate is formed with a plurality of parallel channels in a central portion thereof for conveying the coolant from a coolant inlet to a coolant outlet through the channels.
